(19) Europäisches Patentamt
European Patent Office
Office européen des brevets

(11) **EP 2 754 531 B1**

(12) **FASCICULE DE BREVET EUROPEEN**

(45) Date de publication et mention
de la délivrance du brevet:
**23.09.2015 Bulletin 2015/39**

(51) Int Cl.:
***B23B 39/10*** *(2006.01)*

(21) Numéro de dépôt: **14150494.4**

(22) Date de dépôt: **08.01.2014**

(54) **Perceuse bimoteur à vitesse d'avance contrôlée**

Zweimotorige Bohrmaschine mit kontrolliertem Vorschub

Two-motor drill with controlled advancement rate

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.01.2013 FR 1350196**

(43) Date de publication de la demande:
**16.07.2014 Bulletin 2014/29**

(73) Titulaire: **Seti-Tec
77185 Lognes (FR)**

(72) Inventeur: **Pereira, Sébastien
75012 Paris (FR)**

(74) Mandataire: **Vidon Brevets & Stratégie
16B, rue de Jouanet
BP 90333
35703 Rennes Cedex 7 (FR)**

(56) Documents cités:
**FR-A1- 2 881 366    GB-A- 2 489 018**

## Description

### 1. Domaine de l'invention

Le domaine de l'invention est celui de la conception et de la fabrication des outils de perçage plus communément appelés perceuses.

Plus précisément, l'invention concerne un outil de perçage ou perceuse à vitesse d'avance contrôlée.

### 2. Art antérieur

On connaît des perceuses dont l'arbre de sortie, qui est destiné à entrainer en mouvement un outil de coupe comme un foret, peut être simultanément entrainé en rotation et en translation selon un même axe pour réaliser une opération de perçage.

La demande de brevet FR-A1-2 881 366 décrit une telle perceuse. Cette perceuse comprend un unique moteur relié à l'arbre de sortie par une transmission conçue pour entrainer l'arbre de sortie en translation et en rotation selon un même axe. Le mécanisme d'avance automatique décrit dans ce document ne permet pas de gérer indépendamment l'une de l'autre les fréquence de rotation et vitesse d'avance du foret en action de perçage compte tenu qu'un unique moteur est mis en oeuvre pour assurer ces deux fonctions. Les perceuses de ce type, dont la vitesse d'avance de l'arbre de sortie est directement liée à sa fréquence de rotation, sont appelées perceuses à avance automatique.

Depuis quelques années, la construction aéronautique met en oeuvre, pour optimiser les performances des avions, des structures composées de plusieurs matériaux de natures différentes tels que des alliages d'aluminium associés à de la fibre de carbone ou du titane. Ces matériaux peuvent être utilisés sous forme de panneaux superposés.

Ces différents matériaux requièrent, pour être percés de façon optimale, des conditions différentes en termes de fréquence de rotation et/ou d'avance de l'outil de coupe comme un foret. A titre d'exemple, la vitesse de coupe d'un alliage d'aluminium peut être cinq fois plus rapide que celle du titane.

Toutefois, les perceuses à avance automatique ne permettent pas de modifier à souhait les fréquences de rotation et vitesse d'avance de l'outil de coupe pour permettre d'usiner des matériaux ayant des conditions de coupe différentes dans la mesure où elles n'offrent pas la possibilité de modifier d'une part la fréquence de rotation et d'autre part la vitesse d'avance.

Des perceuses permettant d'adapter la fréquence de rotation et/ou la vitesse d'avance en fonction des matériaux usinés pour permettre le perçage optimal d'un panneau composé de plusieurs couches de matériaux différents on alors été développées. Il s'agit des perceuses à vitesse d'avance contrôlées.

Ces perceuses à vitesse d'avance contrôlée permettent de régler d'une part la fréquence de rotation et d'autre part la vitesse d'avance de leur arbre de sortie.

Pour ce faire, ces perceuses comprennent un premier moteur qui est mis en oeuvre pour animer le foret d'un mouvement de rotation alors qu'un deuxième moteur est mis en oeuvre pour animer le foret d'un mouvement d'avance linéaire. L'arbre de sortie présente une portion cannelée avec laquelle coopère une bague d'entraînement en rotation constituée d'un premier pignon de forme intérieure complémentaire de celle de la portion cannelée de l'arbre. L'arbre de sortie présente également une portion filetée avec laquelle coopère une noix d'entrainement constituée d'un deuxième pignon de forme intérieure complémentaire de celle de la portion filetée de l'arbre. Le premier pignon est relié à l'arbre d'un moteur de mise rotation via une première chaîne de transmission alors que le deuxième pignon est relié à l'arbre d'un moteur d'avance via une deuxième chaîne de transmission. Ces deux chaînes de transmission sont complètement indépendantes l'une de l'autre dans le mesure où elles n'ont aucun composant mécanique en commun.

Au cours d'une opération de perçage, les deux moteurs sont simultanément mis en oeuvre pour entraîner l'arbre de sortie et l'outil qui y est solidarisé à la fois en rotation et en translation. Afin d'adapter les conditions de coupe aux matériaux usinés, il est possible de modifier la fréquence de rotation du foret en modifiant la fréquence de rotation du moteur de mise en rotation, et de modifier la vitesse d'avance du foret en modifiant la fréquence de rotation du moteur d'avance. L'outil de coupe perce alors la pièce à usiner.

Des moyens de retour automatique de l'outil de coupe sont mis en oeuvre de manière à ce que celui-ci soit extrait du perçage réalisé et ramené dans sa position initiale en fin de cycle de perçage.

La mise en oeuvre des perceuses à vitesse d'avance contrôlée actuelles permet de réaliser des opérations de perçage précises. Ces perceuses à vitesse d'avance contrôlée peuvent toutefois encore être améliorées

GB-2489018 décrit une perceuse selon le préambule de la revendication 1.

### 3. Inconvénients de l'art antérieur

La vitesse d'avance du foret est proportionnelle à la différence entre la fréquence de rotation la noix d'entrainement et celle de la bague d'entrainement. Les deux chaines de transmission étant complètement indépendantes, la différence entre la fréquence de rotation la noix d'entrainement et celle de la bague d'entrainement est proportionnelle à la différence entre la fréquence de rotation du moteur de mise en rotation et la fréquence de rotation du moteur d'avance.

En d'autres termes, la vitesse d'avance du foret dépend de la différence entre la fréquence de rotation du moteur de mise en rotation et la fréquence de rotation du moteur d'avance. Elle est donc liée à la fois à la fréquence de rotation du moteur de mise en rotation et à celle du moteur d'avance.

Ce type d'architecture utilisant une noix d'entraînement pour générer l'avance de l'arbre de sortie et une bague d'entraînement pour générer sa rotation avec des chaînes de transmission complètement indépendantes impose donc de conjuguer les fréquences de rotation des moteurs d'avance et de rotation pour obtenir une vitesse d'avance donnée.

La vitesse d'avance est un paramètre important pour garantir que les opérations de perçage soient réalisées de manière optimale. En effet, une vitesse d'avance trop forte peut engendrer un mauvais état de surface du trou ou une déformation de la structure à percer. Au contraire, une vitesse d'avance trop faible peut amener le foret à travailler en dessous de l'épaisseur de copeau minimum et générer de l'écrouissage et de l'échauffement durant le perçage. On peut alors observer une dégradation des pièces usinées et/ou des outils coupants.

Compte tenu que les perceuses à vitesse d'avance contrôlée peuvent être mises en oeuvre pour réaliser des perçages dans des pièces couteuses, comme par exemple des structures d'avions, une détérioration de celles-ci dues à une mauvaise maitrise du perçage peut avoir des conséquences économiques non négligeables.

Afin de limiter un tel risque, la vitesse d'avance de l'arbre de sortie doit être gérée avec une grande fiabilité. Toutefois, compte tenu du fait que la vitesse d'avance de l'arbre de sortie des perceuses à vitesse d'avance contrôlée de l'art antérieur est liée à la fois à la fréquence de rotation du moteur de mise en rotation et à celle du moteur d'avance, la gestion des fréquences de rotation des moteurs dans le programme de perçage est relativement complexe. Ceci tend à réduire ce niveau de fiabilité et à augmenter le risque que les opérations de perçages ne soient pas réalisés de manière optimales.

## 4. Objectifs de l'invention

L'invention a notamment pour objectif de pallier ces inconvénients de l'art antérieur.

Plus précisément, un objectif de l'invention est de fournir une perceuse à vitesse d'avance contrôlée qui permette, dans au moins un mode de réalisation, d'optimiser les opérations de perçage et de limiter les risques de détérioration des pièces usinées et/ou des outils de coupe.

Notamment, l'invention vise à procurer une telle perceuse qui permette, dans au moins un mode de réalisation, de fiabiliser la maitrise de la vitesse d'avance de l'arbre de sortie.

Un autre objectif de l'invention est de mettre en oeuvre, dans au moins un mode de réalisation, une telle perceuse qui soit fiable et/ou simple de conception et/ou robuste.

## 5. Exposé de l'invention

Ces objectifs, ainsi que d'autres qui apparaîtront par la suite, sont atteints à l'aide d'une perceuse à vitesse d'avance contrôlée comprenant des moyens moteurs, et un arbre de sortie destiné à entrainer en mouvement un outil de coupe, lesdits moyens moteurs et ledit arbre de sortie étant reliés par des moyens de transmission comprenant :

- une bague d'entrainement en rotation susceptible d'être entraînée en rotation selon l'axe longitudinal dudit arbre de sortie via lesdits moyens de transmission et lesdits moyens moteurs, ledit arbre de sortie étant lié en rotation à ladite bague d'entrainement et mobile en translation par rapport à celle-ci selon ledit axe longitudinal, et
- une noix d'entrainement taraudée coopérant avec une portion filetée de forme complémentaire ménagée sur ledit arbre de sortie, ladite noix d'entrainement étant susceptible d'être entraînée en rotation selon ledit axe longitudinal par rapport audit arbre de sortie via lesdits moyens de transmission et lesdits moyens moteurs ;

lesdits moyens moteurs comprenant :

- un premier moteur permettant d'entraîner en rotation ledit arbre de sortie autour de son axe longitudinal via lesdits moyens de transmission, et
- un deuxième moteur permettant d'entraîner en translation ledit arbre de sortie le long de son axe longitudinal via lesdits moyens de transmission,

lesdits moyens de transmission étant configurés de telle sorte que la vitesse de translation $V_T$ dudit arbre de sortie le long de son axe longitudinal est égale au produit de la fréquence de rotation $F_R$ dudit deuxième moteur par une constante k selon la formule $V_T = k. F_R$.

Selon l'invention, lesdits moyens de transmission comprennent un ensemble de transmission, ledit ensemble de transmission comprenant un train épicycloïdale comprenant :

- un solaire relié audit deuxième moteur ;
- une couronne intérieure reliée à un premier pignon ;
- des satellites engrenant avec ledit solaire et avec ladite couronne intérieure ;
- un porte-satellites ;

ledit porte-satellites étant relié à un troisième pignon, ledit premier pignon engrenant avec un deuxième pignon solidaire de ladite bague d'entraînement et ledit troisième pignon engrenant avec un quatrième pignon solidaire de ladite noix d'entraînement, ou inversement,

le rapport de réduction dudit train épicycloïdale, le rapport de réduction entre ledit premier pignon et ledit deuxième pignon ou ledit quatrième pignon, et le rapport de réduction entre ledit troisième pignon et ledit quatrième pignon ou ledit deuxième pignon étant déterminés de telle sorte que la différence entre la fréquence de rotation $F_N$ de ladite noix d'entrainement et la fréquence de rotation $F_B$ de ladite bague d'entrainement est égale au produit de la fréquence de rotation $F_R$ dudit deuxième moteur par une constante k selon la formule $F_N - F_B = k. F_R$.

Ainsi, l'invention repose sur une approche tout à fait originale qui consiste à mettre en oeuvre, dans une perceuse à vitesse d'avance contrôlée comprenant un moteur de mise en rotation de l'arbre de sortie et un moteur d'avance permettant l'entrainement en translation de celui-ci, des moyens de transmission prévus pour que la vitesse de translation de l'arbre de sortie dépende uniquement de la fréquence de rotation du moteur d'avance.

Ainsi, la vitesse d'avance de l'arbre de sortie dépend uniquement de la fréquence de rotation du moteur d'avance mais est complètement indépendante de la fréquence de rotation du moteur de mise en rotation. La gestion de l'avance de l'arbre de sortie dépend donc uniquement de la gestion de la fréquence de rotation du moteur d'avance.

La technique selon l'invention permet ainsi d'améliorer la fiabilité avec laquelle la vitesse d'avance de l'arbre de sortie est gérée et de réduire les risques liés à une mauvaise maitrise de celle-ci (détérioration des pièces usinées et/ou des outils de coupe).

La mise en oeuvre d'un système à bague et noix d'entrainement permet de procurer une perceuse dont la distance au centre, c'est-à-dire la distance entre l'axe de l'arbre de la perceuse et le bord du carter de celle-ci, est faible.

Selon une caractéristique préférentielle, lesdits moyens de transmission comprennent une première chaine de transmission reliant ledit premier moteur audit arbre de sortie et une deuxième chaine de transmission reliant ledit deuxième moteur audit arbre de sortie, lesdites première et deuxième chaines de transmission étant dépendante l'une de l'autre.

Il est ainsi possible de dimensionner ces chaines de transmission de telle sorte que la vitesse de translation $V_T$ dudit arbre de sortie le long de son axe longitudinal soit égale au produit de la fréquence de rotation $F_R$ dudit deuxième moteur par une constante k selon la formule $V_T = k. F_R$.

Selon une caractéristique préférentielle, lesdits moyens de transmission sont configurés pour que la différence entre la fréquence de rotation $F_N$ de ladite noix d'entrainement et la fréquence de rotation $F_B$ de ladite bague d'entrainement est égale au produit de la fréquence de rotation $F_R$ dudit deuxième moteur par une constante k selon la formule $F_N - F_B = k. F_R$.

Ainsi, il est possible de modifier la vitesse d'avance de l'arbre de sortie en agissant seulement sur la fréquence de rotation du moteur d'avance.

Dans ce cas, lesdits moyens de transmission comprennent préférentiellement un ensemble de transmission ayant une première entrée reliée audit premier moteur, une deuxième entrée reliée audit deuxième moteur et une sortie constituée par ladite noix d'entraînement, ledit ensemble de transmission étant configuré pour que la différence entre la fréquence de rotation $F_N$ de ladite noix d'entrainement et la fréquence de rotation $F_B$ de ladite bague d'entrainement est égale au produit de la fréquence de rotation $F_R$ dudit deuxième moteur par une constante k selon la formule $F_N - F_B = k. F_R$.

Avantageusement, ledit premier pignon pourra être relié audit premier moteur au moyen d'un couple conique.

La perceuse sera alors de type à renvoi d'angle.

Avantageusement, la perceuse comprendra un arbre moteur auquel ledit solaire est lié en rotation, l'arbre dudit deuxième moteur étant lié audit arbre moteur au moyen d'une vis sans fin.

Cette mise en oeuvre participe à améliorer la compacité de la perceuse.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre une vue de côté d'un exemple d'une perceuse à vitesse d'avance contrôlée selon l'invention ;
- la figure 2 illustre une vue partielle en coupe selon un plan longitudinal de la perceuse illustrée à la figure 1 ;
- la figure 3 illustre une vue partielle en perspective de la transmission de la perceuse illustrée à la figure 2.

## 7. Description d'un mode de réalisation de l'invention

### 7.1. Principe général de l'invention

Le principe général de l'invention repose sur la mise en oeuvre, dans une perceuse à vitesse d'avance contrôlée comprenant un moteur de mise en rotation de l'arbre de sortie et un moteur d'avance permettant l'entrainement en translation de celui-ci, de moyens de transmission prévus pour que la vitesse de translation de l'arbre de sortie dépende uniquement de la fréquence de rotation du moteur d'avance et soit donc complètement indépendante de la fréquence de rotation du moteur de mise en rotation.

La fiabilité avec laquelle la vitesse d'avance de l'arbre de sortie est gérée est donc améliorée par la mise en oeuvre de l'invention, qui concoure donc à réduire les risques liés à une mauvaise maitrise de l'avance (détérioration des pièces usinées et/ou des outils de coupe).

### 7.2. Exemple d'un mode de réalisation d'une perceuse selon l'invention

### 7.2.1. Architecture

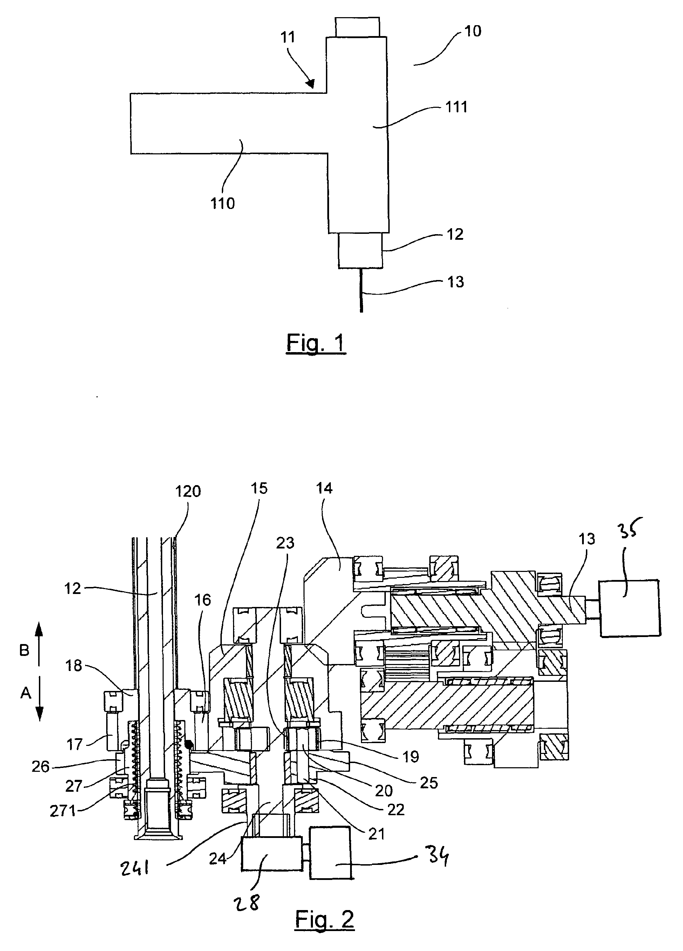

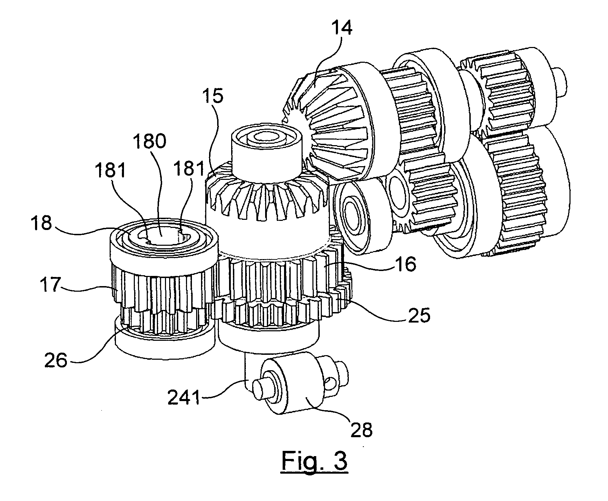

On présente, en relation avec les figures 1 à 3, un exemple d'une perceuse à vitesse d'avance contrôlée selon l'invention.

Ainsi que cela est représenté sur la figure 1, une telle perceuse à vitesse d'avance contrôlée 10 comprend un carter 11.

Le carter 11 comprend une première portion de carter 110 et une deuxième portion de carter 111 qui s'étendent sensiblement perpendiculairement l'une à l'autre.

La portion 111 loge un arbre de sortie 12 monté mobile en rotation et en translation selon l'axe longitudinal de la portion 111.

Des moyens de solidarisation d'un outil 13, par exemple un foret, sont placés à l'extrémité de l'arbre de sortie 12. Ces moyens de solidarisation peuvent par exemple comprendre une pince de foret.

La figure 2 illustre une vue en coupe partielle, selon un plan passant par les axes longitudinaux de la première 110 et de la deuxième 111 portion de carter, d'une partie de la perceuse 10 de la figure 1 à laquelle le carter 11 a été retiré.

Cette perceuse 10 comprend des moyens moteurs reliés à l'arbre de sortie 12 via des moyens de transmissions.

Les moyens moteurs comprennent deux moteurs : un moteur de mise en rotation 35 et un moteur d'avance 34. Dans ce mode de réalisation, ces moteurs sont électriques. Il pourra par exemple d'agir de moteurs électriques synchrones à aimants permanents alimentés par des onduleurs eux-mêmes connectés à une batterie ou au secteur.

L'arbre du moteur de mise en rotation est solidaire d'un arbre 13 lui-même solidaire d'un premier pignon conique 14. Ce premier pignon conique 14 engrène avec un deuxième pignon conique 15. Ce pignon conique 15 est lié en rotation à un premier pignon droit 16. Ce premier pignon 16 engrène avec un deuxième pignon 17 qui est lié en rotation à une bague d'entraînement en rotation 18.

La bague d'entraînement en rotation 18 est traversée par un perçage central 180 ménagé le long de son axe longitudinal. Des rainures longitudinales 181 forment saillie à l'intérieur du perçage 180.

L'arbre de sortie 12 présente une portion avec des rainures 120 longitudinales de forme complémentaire de celle des rainures 181 de la bague d'entraînement 18.

La bague d'entraînement 18 est ainsi montée mobile en translation le long de l'axe longitudinal de l'arbre de sortie 12 tout en y étant liée en rotation.

Le premier pignon 16 est lié en rotation avec la couronne intérieure 19 d'un train épicycloïdale.

Cette couronne intérieure 19 engrène avec des satellites 20 montés mobiles en rotation sur des axes 21 solidaires d'un porte-satellites 22.

Les satellites 20 engrènent avec un solaire 23 qui est lié en rotation avec un arbre moteur 24. L'arbre moteur 24 est monté mobile en rotation le long d'un axe parallèle à l'axe longitudinal de l'arbre de sortie 12.

Le porte-satellites 22 est lié en rotation avec un troisième pignon 25 qui engrène avec un quatrième pignon 26 lié en rotation à une noix d'entrainement en translation 27.

La noix d'entraînement 27 comprend un taraudage intérieur 271 de forme complémentaire d'une portion filetée manégée à la surface de l'arbre de sortie 12.

Une des extrémités de l'arbre moteur 24 présente une vis sans fin 241 qui coopère avec un cinquième pignon 28 lié en rotation à l'arbre du moteur d'avance.

Le pignon 16, le pignon 17, la couronne 19, les satellites 20, les axes 21, le porte-satellites 22, le solaire 23, l'arbre moteur 24, le pignon 25, le pignon 26 constituent en ensemble de transmission dont le pignon 17 constitue une première entrée, l'arbre moteur 24 constitue une deuxième entrée et le pignon 26 constitue la sortie. Ainsi, si l'arbre moteur est maintenu immobile, une rotation de la bague d'entrainement engendre une rotation de la noix d'entraînement. Une rotation de la bague d'entrainement et de l'arbre moteur entraine une rotation de la noix d'entraînement.

Cet ensemble de transmission est configuré pour entrainer en rotation la noix d'entraînement 27 à une fréquence identique à celle de la bague d'entrainement 18 quelle que soit la fréquence de rotation du moteur d'entrainement en rotation et tant que la fréquence de rotation du moteur d'avance est nulle.

En d'autres termes, cet ensemble de transmission est configuré pour que la différence entre la fréquence de rotation $N_{27}$ ou $F_N$ de la noix d'entrainement 27 et la fréquence de rotation $N_{18}$ ou $F_B$ de la bague d'entrainement 18 est uniquement proportionnelle à la fréquence de rotation $N_{24}$ ou $F_R$ du moteur d'avance selon la formule $N_{27} - N_{18} = K.N_{24}$ ou $F_N - F_B = K.F_R$, K étant une constante. La vitesse d'avance $V_T$ de l'arbre de sortie 12 est donc seulement dépendante de la fréquence de rotation $F_R$ du moteur d'avance selon la formule $V_T = K.F_R$, K étant une constante.

Cet ensemble de transmission comprend deux chaines de transmission. La première chaine de transmission relie le moteur d'entrainement en rotation à la bague d'entrainement 18. Dans ce mode de réalisation, elle comprend les pignons 14, 15, 16 et 17. La deuxième chaine de transmission relie le moteur d'avance à la noix d'entrainement 27. Cette chaine de transmission comprend deux entrées, à savoir le moteur d'avance et la couronne 19, et une sortie, à savoir la noix d'entrainement 27. Cette deuxième chaine de transmission comprend l'arbre moteur 24, le solaire 23, les satellites 20, la couronne 19, le porte-satellites 22, le pignon 25, et le pignon 26 auquel est liée la noix d'entrainement 27.

Ces deux chaines de transmission sont dépendantes l'une de l'autre. Elles partagent en effet au moins certains composants, c'est-à-dire que certains composants de la première chaine de transmission font également partie de la deuxième chaine de transmission. En l'occurrence, la couronne 19 et le pignon 16 sont portés par la même pièce. Cette dépendance entre ces deux chaines de transmission respectivement reliée au moteur d'entrainement en rotation et au moteur d'avance permet, en agissant convenablement sur les rapports de réduction des différents trains d'engrenages composant celles-ci, de ne faire dépendre la vitesse d'avance de l'arbre de sortie que de la fréquence de rotation du moteur d'avance et non de celle du moteur de mise en rotation.

Plus précisément, le rapport de réduction $R_1$ du train épicycloïdale, le rapport de réduction $R_2$ entre ledit premier pignon 16 et le deuxième pignon 17 solidaire de la bague d'entrainement 18, et le rapport de réduction $R_3$ entre le troisième pignon 25 et le quatrième pignon 26 solidaire de la noix d'entraînement 27 sont déterminés de telle sorte que la différence entre la fréquence de rotation de la noix d'entrainement 27 et celle de la bague d'entrainement 18 est seulement proportionnelle à la fréquence de rotation du moteur d'avance.

Les valeurs de $R_1$, $R_2$ et $R_3$ sont les suivantes :

$$R_1 = (N_{24} - N_{15}) / (N_{22} - N_{15}) = 1 + (Z_{19} / Z_{23}) \,(*)$$

$$R_2 = N_{18} / N_{15} = Z_{16} / Z_{17}$$

$$R_3 = N_{27} / N_{22} = Z_{25} / Z_{26}$$

N et Z sont respectivement la fréquence de rotation et le nombre de dents des éléments indiqués en indice.

On souhaite que l'avance de l'arbre de sortie 12 soit uniquement proportionnelle à la différence entre la fréquence de rotation de la noix d'entrainement 27 et celle de la bague d'entrainement 18. En d'autres termes :

$$N_{27} - N_{18} = K.N_{24}$$

K étant une constante et $N_{24}$ étant proportionnelle à la fréquence de rotation du moteur d'avance dans la mesure ou l'arbre 24 est relié à celui-ci.

$$N_{27} - N_{18} = (N_{22} . Z_{25} / Z_{26}) - (N_{15} . Z_{16} / Z_{17})$$

Compte tenu de l'équation (*), on obtient :

$$(N_{24} - N_{15}) = R_1(N_{22} - N_{15})$$

$$N_{15} = (N_{24} - R_1N_{22}) / (1 - R_1)$$

Ceci conduit à :

$$N_{27} - N_{18} = (N_{22} \cdot Z_{25} / Z_{26}) - ((N_{24} - R_1N_{22}) / (1 - R_1) \cdot Z_{16} / Z_{17})$$

$$N_{27} - N_{18} = (N_{22} \cdot Z_{25} / Z_{26}) + (R_1N_{22} / (1 - R_1) \cdot Z_{16} / Z_{17}) - (N_{24} / (1 - R_1) \cdot Z_{16} / Z_{17})$$

Si l'on souhaite que :

$$N_{27} - N_{18} = K.N_{24}$$

Alors :

$$(Z_{25} / Z_{26}) + (R_1 / (1 - R_1) \cdot Z_{16} / Z_{17}) = 0$$

Soit :

$$(R_1 - 1) \cdot Z_{25} \cdot Z_{17} = R_1 \cdot Z_{16} \cdot Z_{26}$$

avec $R_1 = 1 + Z_{19} / Z_{23}$

En choisissant les nombres de dents de cette façon, l'avance de l'arbre de sortie 12 le long de son axe longitudinal sera uniquement proportionnelle à la fréquence de rotation du moteur d'avance.

Ainsi, la translation de l'arbre de sortie 12 le long de son axe longitudinal est nulle lorsque la fréquence de rotation du moteur d'avance est nulle et que la fréquence de rotation du moteur de mise en rotation est nulle ou pas du fait que la bague d'entrainement 18 et la noix d'entrainement 27 ont la même fréquence de rotation. En revanche, lorsque le moteur de mise en translation ou moteur d'avance est animé, la fréquence de rotation de la bague d'entraînement 18 et celle de la noix d'entrainement 27 sont différentes en sorte que l'arbre de sortie 12 se translate le long de son axe longitudinal dans un sens ou dans l'autre selon le sens de rotation du moteur d'avance.

Il en résulte que l'avance de l'arbre de sortie 12 est seulement liée à la fréquence de rotation du moteur d'avance et non à celle du moteur d'entraînement en rotation.

La perceuse comprend des moyens de commande qui peuvent être actionnés pour lancer un cycle de perçage. Elle comprend également des moyens de contrôle qui permettent de programmer les paramètres des opérations de perçage réalisées avec la perceuse, notamment la profondeur de perçage, la vitesse de coupe et la vitesse d'avance. La vitesse de coupe et la vitesse d'avance pourront être pilotées indépendamment en fonction d'une stratégie de perçage incluant la prise en compte de mesure de profondeur de perçage, et/ou d'effort de coupe et/ou de couple visant a détecter les différentes transitions dans le perçage de structures incluant des matériaux de natures différentes.

La perceuse comprend des moyens d'inversion automatique du sens de translation de l'arbre de sortie lorsque celui-ci atteint une valeur seuil prédéterminée représentative de la profondeur de perçage afin de permettre la rétractation du foret en dehors du trou à la fin du perçage.

### 7.2.2. Fonctionnement

Afin de réaliser une opération de perçage, un outil de coupe comme un foret est solidarisé à l'extrémité de l'arbre de sortie 12 au moyen d'une pince de foret.

Les paramètres du perçage sont enregistrés dans les moyens de programmation de la perceuse.

L'opérateur active les moyens d'actionnement pour lancer un cycle de perçage.

Le moteur de mise en rotation est mis en oeuvre et tourne en sens antihoraire vu depuis l'arrière du moteur. Il entraine en rotation en sens antihoraire le premier pignon conique 14. Le premier pignon conique 14 entraine le deuxième pignon conique 15 en sens antihoraire vu depuis le dessus de la perceuse.

Le premier pignon 16, qui est solidaire du pignon 15, tourne également en sens antihoraire et entraine le deuxième pignon 17 en sens horaire. La bague d'entrainement 18, qui est solidaire du pignon 17, tourne également en sens horaire et entraine l'arbre de sortie 12 en rotation en sens horaire.

La couronne 19, solidaire du pignon 16, tourne en sens antihoraire. Les satellites 20 tournent en sens antihoraire. Le moteur d'avance est à l'arrêt, l'arbre moteur 24 est donc immobile, de même que le solaire 23 qui en est solidaire. Le porte-satellites 22 tourne alors en sens antihoraire. Le pignon 25, solidaire du porte-satellites 22 tourne également en sens antihoraire et entraine le pignon 26 en sens horaire. La noix d'entrainement 27 tourne alors en sens horaire à la même fréquence que la bague d'entraînement 18 si bien que l'arbre de sortie 12 tourne en sens horaire autour de son axe longitudinal tout en ne subissant aucune translation le long de cet axe.

Le moteur d'avance est ensuite mis en oeuvre de manière telle que l'arbre moteur 24 est entrainé en rotation en sens antihoraire via le pignon 28 et la vis sans fin 241 vu depuis l'extrémité de l'arbre de sortie 12 opposée à celle destinée à coopérer avec le foret. Ceci tend à accélérer la fréquence de rotation du porte-satellites 22 et du pignon 25 en sens antihoraire, ainsi que celles du pignon 26 et de la noix d'entrainement 27 en sens horaire.

La rotation relative de la noix d'entrainement par rapport à la bague d'entrainement est donc dans le sens horaire. La portion filetée de l'arbre de sortie 12 étant dans le sens filetage à gauche, la noix d'entrainement entraine en translation l'arbre de sortie 12 dans le sens du perçage selon la flèche A. Selon la stratégie de perçage mise en oeuvre, la fréquence de rotation est modulée pour répondre aux exigences des matériaux rencontrés par le foret.

Dès que les moyens d'inversion automatique du sens de translation de l'arbre de sortie détectent que le déplacement linéaire de l'arbre de sortie atteint une valeur seuil prédéterminée, ils inversent le sens de rotation du moteur d'avance en sorte que l'arbre de sortie se translate suivant la flèche B. Le foret est alors rétracté en dehors du trou à la fin du perçage.

### 7.2.3. Variante

Dans une variante, le pignon 16 pourra être directement entraîné en rotation par le moteur de mise en rotation sans qu'aucun couple conique ne soit mis en oeuvre entre l'arbre de ce moteur et le pignon 16.

Dans d'autres variantes, le pignon 25 pourra engrener avec le pignon 17 et le pignon 16 engrener avec le pignon 26. Dans ce cas, un couple conique pourra ou non être mis en oeuvre entre l'arbre du moteur de mise en rotation et le pignon 25.

Les calculs de réduction précédents ne s'appliquent pas à ces variantes.

L'arbre du moteur d'avance pourra être directement relié à l'arbre moteur sans dispositif de type vis sans fin.

### 7.3. Avantages

Dans une perceuse à vitesse d'avance contrôlée selon l'invention, la vitesse d'avance de l'arbre de sortie est uniquement lié à la fréquence de rotation du moteur d'avance et non à la combinaison de la fréquence de rotation du moteur de mise en rotation et de celle du moteur d'avance.

Il en résulte que la gestion de l'avance de l'arbre de sortie peut être générée de manière optimale avec une grande fiabilité. On limite ainsi le risque que l'avance soit mal contrôlée au cours d'une opération de perçage et l'endommagement des pièces à usiner et/ou des outils de coupe.

### Revendications

1. Perceuse à vitesse d'avance contrôlée (10) comprenant des moyens moteurs (34, 35), et un arbre de sortie (12) destiné à entrainer en mouvement un outil de coupe, lesdits moyens moteurs (34, 35) et ledit arbre de sortie (12) étant reliés par des moyens de transmission (16, 17, 19, 20, 21, 22, 24, 26) comprenant :

   - une bague d'entrainement en rotation (18) susceptible d'être entraînée en rotation selon l'axe longitudinal dudit arbre de sortie (12) via lesdits moyens de transmission et lesdits moyens moteurs (35), ledit arbre de sortie (12) étant lié en rotation à ladite bague d'entrainement (18) et mobile en translation par rapport à celle-ci selon ledit axe longitudinal, et
   - une noix d'entraînement taraudée (27) coopérant avec une portion filetée de forme complémentaire ménagée sur ledit arbre de sortie (12), ladite noix d'entrainement (27) étant susceptible d'être entraînée en rotation selon ledit axe longitudinal par rapport audit arbre de sortie (12) via lesdits moyens de transmission et lesdits moyens moteurs (34, 35) ;

lesdits moyens moteurs comprenant :

- un premier moteur (35) permettant d'entraîner en rotation ledit arbre de sortie (12) autour de son axe longitudinal via lesdits moyens de transmission, et
- un deuxième moteur (34) permettant d'entraîner en translation ledit arbre de sortie (12) le long de son axe longitudinal via lesdits moyens de transmission,

lesdits moyens de transmission étant configurés de telle sorte que la vitesse de translation $V_T$ dudit arbre de sortie le long de son axe longitudinal est égale au produit de la fréquence de rotation $F_R$ dudit deuxième moteur par une constante k selon la formule $V_T = k. F_R$,
**caractérisé en ce que** lesdits moyens de transmission comprennent un ensemble de transmission, ledit ensemble de transmission comprenant un train épicycloïdale comprenant :

- un solaire (23) relié audit deuxième moteur (34) ;
- une couronne intérieure (19) reliée à un premier pignon (16) ;
- des satellites (20) engrenant avec ledit solaire (23) et avec ladite couronne intérieure (19) ;
- un porte-satellites (22) ;

ledit porte-satellites (22) étant relié à un troisième pignon (25), ledit premier pignon (16) engrenant avec un deuxième pignon (17) solidaire de ladite bague d'entraînement (18) et ledit troisième pignon (25) engrenant avec un quatrième pignon (26) solidaire de ladite noix d'entraînement (27), ou inversement,
le rapport de réduction dudit train épicycloïdale, le rapport de réduction entre ledit premier pignon (16) et ledit deuxième pignon (17) ou ledit quatrième pignon (26), et le rapport de réduction entre ledit troisième pignon (25) et ledit quatrième pignon (26) ou ledit deuxième pignon (17) étant déterminés de telle sorte que la différence entre la fréquence de rotation $F_N$ de ladite noix d'entrainement (27) et la fréquence de rotation $F_B$ de ladite bague d'entrainement (18) est égale au produit de la fréquence de rotation $F_R$ dudit deuxième moteur par une constante k selon la formule $F_N - F_B = k. F_R$.

2. Perceuse selon la revendication 1, **caractérisée en ce que** ledit premier pignon (16) est relié audit premier moteur au moyen d'un couple conique (14, 15).

3. Perceuse selon la revendication 1, **caractérisée en ce qu'**elle comprend un arbre moteur (24) auquel ledit solaire (23) est lié en rotation, l'arbre dudit deuxième moteur (34) étant lié audit arbre moteur (24) au moyen d'une vis sans fin.

## Patentansprüche

1. Bohrmaschine mit kontrolliertem Vorschub (10), umfassend Motormittel (34, 35) und eine Antriebswelle (12), die dazu bestimmt ist, ein Schneidwerkzeug zu einer Bewegung anzutreiben, wobei die Motormittel (34, 35) und die Antriebswelle (12) durch Übertragungsmittel (16, 17, 19, 20, 21, 22, 24, 26) verbunden sind, umfassend:

- einen Drehantriebsring (18), der geeignet ist, um die Längsachse der Antriebswelle (12) über die Übertragungsmittel und die Motormittel (35) in Rotation versetzt zu werden, wobei die Antriebswelle (12) drehfest mit dem Antriebsring (18) und relativ zu diesem entlang der Längsachse translatorisch beweglich verbunden ist, und
- eine mit Gewinde versehene Antriebsmutter (27), die mit einem Gewindeabschnitt von komplementärer Form zusammenwirkt, der auf dem Antriebsschaft (12) ausgebildet ist, wobei die Antriebsmutter (27) um die Längsachse gegenüber der Antriebswelle (12) über die Übertragungsmittel und die Motormittel (34, 35) in Rotation versetzt werden kann,

wobei die Motormittel Folgendes umfassen:

- einen ersten Motor (35), der es ermöglicht, die Antriebswelle (12) um ihre Längsachse über die Übertragungsmittel in Rotation zu versetzen, und
- einen zweiten Motor (34), der es ermöglicht, die Antriebswelle (12) entlang ihrer Längsachse über die Übertragungsmittel in eine translatorische Bewegung zu versetzten,

wobei die Übertragungsmittel derart konfiguriert sind, dass die Translationsgeschwindigkeit $V_T$ der Antriebswelle entlang ihrer Längsachse gleich dem Produkt aus der Rotationsfrequenz $F_R$ des zweiten Motors und einer Konstante k nach der Formel $V_T = k.F_R$ ist,

**dadurch gekennzeichnet, dass** die Übertragungsmittel eine Getriebeanordnung aufweisen, wobei die Getriebeanordnung ein Planetengetriebe aufweist, umfassend:

- ein Sonnenrad (23), das mit dem zweiten Motor (34) verbunden ist;
- einen inneren Kranz (19), der mit einem ersten Ritzel (16) verbunden ist;
- Satelliten (20), die mit dem Sonnenrad (23) und dem inneren Kranz (19) in Eingriff stehen;
- einen Satellitenträger (22);

wobei der Satellitenträger (22) mit einem dritten Ritzel (25) verbunden ist, wobei das erste Ritzel (16) mit einem zweiten Ritzel (17) in Eingriff steht, das mit dem Antriebsring (18) fest verbunden ist, und das dritte Ritzel (25) mit einem vierten Ritzel (26) in Eingriff steht, das mit der Antriebsmutter (27) fest verbunden ist, oder umgekehrt, wobei das Reduktionsverhältnis des Planetengetriebes, das Reduktionsverhältnis zwischen dem ersten Ritzel (16) und dem zweiten Ritzel (17) oder dem vierten Ritzel (26) und das Reduktionsverhältnis zwischen dem dritten Ritzel (25) und dem vierten Ritzel (26) oder dem zweiten Ritzel (17) derart bestimmt sind, dass die Differenz zwischen der Rotationsfrequenz $F_N$ der Antriebsmutter (27) und der Rotationsfrequenz $F_B$ des Antriebsrings (18) gleich dem Produkt aus der Rotationsfrequenz $F_R$ des zweiten Motors und einer Konstante k nach der Formel $F_N-F_B = k.F_R$ ist.

2. Bohrmaschine nach Anspruch 1, **dadurch gekennzeichnet, dass** das erste Ritzel (16) mit dem ersten Motor mittels eines Kegelrads (14, 15) verbunden ist.

3. Bohrmaschine nach Anspruch 1, **dadurch gekennzeichnet, dass** sie eine Motorwelle (24) aufweist, mit der das Sonnenrad (23) drehbar verbunden ist, wobei die Welle des zweiten Motors (34) mit der Motorwelle (24) mittels einer Schnecke verbunden ist.

**Claims**

1. A controlled feed rate drill (10) comprising drive means (34, 35) and an output shaft (12) intended to set a cutting tool into motion, said drive means (34, 35) and said output shaft (12) being linked by transmission means (16, 17, 19, 20, 21, 22, 24, 26) comprising:

- a rotary drive ring (18) capable of being rotationally driven along the longitudinal axis of said output shaft (12) via said transmission means and said drive means (35), said output shaft (12) being rotationally linked to said drive ring (18) and translationally movable in relation thereto along said longitudinal axis; and
- a tapped drive nut (27) cooperating with a threaded portion of complementary shape provided on said output shaft (12), said drive nut (27) being capable of being rotationally driven along said longitudinal axis in relation to said output shaft (12) via said transmission means and said drive means (34, 35);

said drive means comprising:

- a first motor (35) allowing said output shaft (12) to be rotationally driven about its longitudinal axis via said transmission means; and
- a second motor (34) allowing said output shaft (12) to be translationally driven along its longitudinal axis via said transmission means,

said transmission means being configured so that the translation speed $V_T$ of said output shaft along its longitudinal axis is equal to the product of the rotation frequency $F_R$ of said second motor multiplied by a constant k, according to the formula $V_T=kxF_R$,

**characterised in that** said transmission means comprise a transmission unit, said transmission unit comprising an epicyclic train comprising:

- a sun gear (23) linked to said second motor (34);
- an inner gear (19) linked to a first gear (16);
- planet gears (20) meshing with said sun gear (23) and with said inner gear (19);
- a planet gear support (22);

said planet gear support (22) being linked to a third gear (25), said first gear (16) meshing with a second gear (17) rigidly connected to said drive ring (18) and said third gear (25) meshing with a fourth gear (26) rigidly connected to said drive nut (27), or vice versa,

the reduction ratio of said epicyclic train, the reduction ratio between said first gear (16) and said second gear (17) or said fourth gear (26) and the reduction ratio between said third gear (25) and said fourth gear (26) or said second gear (17) being determined so that the difference between the rotation frequency $F_N$ of said drive nut (27) and the rotation frequency $F_B$ of said drive ring (18) is equal to the product of the rotation frequency $F_R$ of said second motor multiplied by a constant k, according to the formula $F_N - F_B = k \times F_R$.

2. The drill according to claim 1, **characterised in that** said first gear (16) is linked to said first motor by means of a crown wheel and pinion (14, 15).

3. The drill according to claim 1, **characterised in that** it comprises a drive shaft (24), to which said sun gear (23) is rotationally linked, the shaft of said second motor (34) being linked to said drive shaft (24) by means of a worm.

Fig. 1

Fig. 2

Fig. 3

**EP 2 754 531 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2881366 A1
- GB 2489018 A